# EUROPEAN PATENT APPLICATION

(11) **EP 4 534 300 A1**
(43) Date of publication of application: **09.04.2025**
(21) Application number: 24817456.7
(22) Date of filing: 05.01.2024

(54) **OPTICAL ANTI-COUNTERFEITING ELEMENT AND OPTICAL ANTI-COUNTERFEITING PRODUCT**

(30) Priority: 18.07.2023 CN 202310881914
(71) Applicant: Zhongchao Special Security Technology Co., Ltd, Beijing 100070 (CN); China Banknote Printing and Minting Corp., Beijing 100044 (CN)
(72) Inventor: ZHANG, Weiwei, Beijing 100070 (CN); SUN, Kai, Beijing 100070 (CN)
(74) Representative: Zacco GmbH
(86) International application number: PCT/CN2024/070940
(87) International publication number: WO 2025/015871

(57) **Abstract**

The present invention provides an optical anti-counterfeiting element and an optical anti-counterfeiting product. The optical anti-counterfeiting element includes: a substrate; and a micro-structure layer, wherein the micro-structure layer is located on at least one side surface of the substrate, and aplane where the micro-structure layer is located has at least one principal line, the micro-structure layer comprises a plurality of reflective structures along an extension direction of the at least one principal line; aside of each of the plurality of reflective structures away from the substrate is provided with a reflective surface, and a plane angle of a dihedral angle formed by the reflective surface and asurface of the substrate is an inclination angle; wherein inclination angles of all of the plurality of reflective structures in the extension direction of the at least one principal lineat least includea variation period, and within the variation period, avariation of all of the inclination angles is formed by superposing a main variation and a secondary variation, and when the optical anti-counterfeiting element is rotated along a rotation axis in aplane where the optical anti-counterfeiting element is located, the optical anti-counterfeiting element presents a global dynamic feature and a localized dynamic feature due to the main variation and the secondary variation. The present invention solves the problem in the related art that a dynamic feature of an optical anti-counterfeiting element is not easily recognized.

## Description

The present invention claims priority to Patent Application No. 202310881914.2, filed to the China National Intellectual Property Administration on July 18, 2023 and entitled "Optical Anti-Counterfeiting Element and Optical Anti-Counterfeiting Product".

### Technical Field

The present invention relates to the technical field of anti-counterfeiting, and in particular, to an optical anti-counterfeiting element and an optical anti-counterfeiting product.

### Background

Public anti-counterfeiting features face the most widely users, and need to have readily-recognizable features, such that the general public may distinguish the authenticity in a very short period of time. Printed graphic-text obtained by a traditional printing process generally has the same properties when observed at various angles due to the property of diffuse reflection of ink, and the intensity and spectrum of reflected light generally remain unchanged. Such a property is easy to identify, but has few variations, maynot bring a unique effect, and is easily replicated and counterfeited by lawbreakers. Optical anti-counterfeiting is a method that achieves stable and planarized unique features different from those in traditional printing by means of various means such as special plating layers, micro-nano structures, and frame extraction and sampling, etc. By combined use of the described technologies, a directional reflection metal feature and a three-dimensional feature floating/sinking in a plane of an optical anti-counterfeiting element may be achieved. Moreover, due to the directionality of the micro-nano structures and the plating layers, an emission direction of a light ray may be modulated to a specific direction, which may also produce an interactive feature. That is, when the public moves (inclining forward and backward, inclining left and right, and rotating left and right) the optical anti-counterfeiting element, the light rays at different positions/patterns are observed, and images at various positions are continuous to form a dynamic feature. Such a dynamic feature may well guide the attention of an observer, such that the sight of the public is brought to the position of the optical anti-counterfeiting element involuntarily, thereby attracting the interest of the observer to further observe the dynamic feature to distinguish authenticity.

When the dynamic feature is determined by the micro-nano structure, a certain range of dynamic effect may be achieved by selecting the type and parameters of the micro-structure. For example, as for traditional holographic gratings, a dynamic feature may be formed by changing parameters such as a period and an angle thereof and sequentially arranging the gratings according to a specific law. However, when the movement distance of the dynamic feature in the optical anti-counterfeiting element is too long, the described micro-structure will be "diluted" into the too long distance, such that the micro-structure has same parameters in the relatively long region, and thus the region is also seen by the observer, and a wide bright spot is formed, such that the dynamic feature becomes blurred, and the visual impact brought by the dynamic feature to the observer is weakened.

That is to say, in the related art, the optical anti-counterfeiting element has the problem that the dynamic feature is not easily recognized.

### Summary

Some embodiments of the present invention provide an optical anti-counterfeiting element and an optical anti-counterfeiting product, so as to solve the problem in the related art that a dynamic feature of an optical anti-counterfeiting element is not easily recognized.

In an embodimentof the present invention, an optical anti-counterfeiting elementisprovided, including: a substrate; and a micro-structure layer, wherein the micro-structure layer is located on at least one side surface of the substrate, and aplane where the micro-structure layer is located has at least one principal line, the micro-structure layer includes a plurality of reflective structures along an extension direction of the at least one principal line; aside of each of the plurality of reflective structures away from the substrate is provided with a reflective surface, and a plane angle of a dihedral angle formed by the reflective surface and asurface of the substrate is an inclination angle; wherein inclination angles of all of the plurality of reflective structures in the extension direction of the at least one principal lineat least include a variation period, and within the variation period, the variation of all of the inclination angles is formed by superposing a main variation and a secondary variation, and when the optical anti-counterfeiting element is rotated along a rotation axis in aplane where the optical anti-counterfeiting element is located, the optical anti-counterfeiting element presents a global dynamic feature and a localized dynamic feature due to the main variation and the secondary variation.

In some embodiments, within the variation period, the main variation at least includes one of the plurality of the reflective structures at the beginning of the variation period having a maximum inclination angle, and one of the plurality of the reflective structures at the end of the variation period having a minimum inclination angle.

In some embodiments, within the variation period, the main variation at least includes one of the plurality of the reflective structures at the beginning of the variation period having a minimum inclination angle, and one of the plurality of the reflective structures at the end of the variation period having a maximum inclination angle.

In some embodiments, within the variation period, the main variation at least includes a variation of decreasing first and then increasing of the inclination angles of all of the plurality of the reflective structures from the beginning of the variation period to the end of the variation period.

In some embodiments, within the variation period, the secondary variation at least includes an alternate variation process that inclination angles of at least a part of all of the plurality of the reflective structures have at least one alternate variation process of increasing and decreasing.

In some embodiments, the main variation and the secondary variation both have standard variation design values, and the inclination angles randomly vary within a range of 80%-120% of the standard variation design values.

In some embodiments, the inclination angles randomly vary within a range of 90%-110% of the standard variation design values.

In some embodiments, an angle formed by rotation of one of the plurality of the reflective structures along a normal perpendicular to the surface of thesubstrate forms a rotation angle.

In some embodiments, at least a part of all of the plurality of the reflective structures of the micro-structure layer form an adjustment structure, and rotation angles of reflective structures in the adjustment structure appear random variation or pseudo-random variation.

In some embodiments, the number of the reflective structures in theadjustment structure is n and the reflective structuresin the adjustment structureare divided into m groups, rotation angles of one of the plurality of the reflective structures in the same group in the adjustment structureare the same, and rotation angles of reflective structures in different groups appear random variation or pseudo-random variation, where m<n and the number of reflective structures in each group is not less than 1.

In some embodiments, the rotation axe and the at least one principal line are arranged in one-to-one correspondence, and the rotation axis anda principal lineof the at least one principal line that are correspondingly arranged are arranged at an included angle.

In some embodiments, an included angle between the rotation axis and the principal lineof the at least one principal line correspondingly arranged is α, the global dynamic feature includes a rolling feature, and an included angle between amovement direction of the rolling feature and arotation direction of the optical anti-counterfeiting element is β, and a sum of α and β is 90°.

In some embodiments, the optical anti-counterfeiting element further includes a plating layer; the plating layer is located on aside surface of the micro-structure layer away from the substrate, and the plating layer is configured for enhancing a reflection effect or a transmission effect.

In some embodiments, the plating layer is a single-layer plating layer.

In some embodiments, the single-layer plating layer includes one of a single-layer metal plating layer or a single-layer dielectric plating layer.

In some embodiments, the plating layer is a multilayer plating layer.

In some embodiments, the multilayer plating layer includes one of a multilayer dielectric plating layer, and a plating layer formed by alternately stacking metal plating layers and dielectric plating layers.

In some embodiments, the multilayer plating layer is a Fabry-Perot resonant cavity structure consisting of a metal plating layer, a dielectric plating layer and a metal plating layer.

In some embodiments, each of the plurality of the reflective structures has a feature size greater than or equal to 1 µm and less than or equal to 500 µm.

In some embodiments, each of the plurality of the reflective structures has a feature size greater than or equal to 2 µm and less than or equal to 100 µm.

In some embodiments, aside surface of one of the plurality of the reflective structures away from the substrate is a flat surface, and the flat surface forms the reflective surface.

In some embodiments, the side surface of one of the plurality of the reflective structures away from the substrate is a curved surface, and an average value of plane angles of dihedral angles formed by tangent planes of all points on the curved surface and the surface of the substrate represents a plane angle of a dihedral angle formed by the reflective surface and the surface of the substrate.

In another embodiment of the present invention, an optical anti-counterfeiting productisprovided, including the described optical anti-counterfeiting element.

By applying the technical solutions of some embodiments of the present invention, the optical anti-counterfeiting element includes a substrate and a micro-structure layer, wherein the micro-structure layer is located on at least one side surface of the substrate, and aplane where the micro-structure layer is located has at least one principal line, the micro-structure layer includes a plurality of reflective structures along an extension direction of the at least one principal line; aside of each of the plurality of reflective structures away from the substrate is provided with a reflective surface, and a plane angle of a dihedral angle formed by the reflective surface and asurface of the substrate is an inclination angle θ; wherein inclination angles θ of all of the plurality of reflective structures in the extension direction of the at least one principal lineat least include a variation period, and within the variation period, the variation of all of the inclination angles θ is formed by superposing a main variation and a secondary variation, and when the optical anti-counterfeiting element is rotated along a rotation axis in the plane where the optical anti-counterfeiting element is located, the optical anti-counterfeiting element presents a global dynamic feature and a localized dynamic feature due to the main variation and the secondary variation.

By providing the plurality of reflective structures having reflective surfaces along the at least one principal line, light rays reflected by each of the reflective surfacesmay enter user's eyes, such that a user may observe the reflective surface at aposition; and the inclination angles θ of the reflective surfaces vary according to a specific rule, which may bring about many unique optical effects. Moreover, the inclination angles θ of the reflective surfaces on the at least one principal line have a variation period, and the variation of the inclination angles θ of the reflective surfaces within the variation period is divided into the main variation and the secondary variation, such that when rotating the optical anti-counterfeiting element along the rotation axis, the user may observe the global dynamic feature and the localized dynamic feature, and dynamic featuresaremore complex and exquisite, which ensures the anti-counterfeiting effect while being convenient for the user to recognize; and in the whole process of the user rotating the optical anti-counterfeiting element, the dynamic featuresareclearly visible.

### Brief Description of the Drawings

The drawings of the description, constituting a part of the present invention, are configured for providing further understanding of the present invention. The illustrative embodiments of the present invention and illustrations thereof are configured for explaining the present invention, rather than constitute inappropriate limitation on the present invention. In the drawings:
Fig. 1 is a schematic diagram showing application of an optical anti-counterfeiting element according to Embodiment I of the present invention;
Fig. 2 shows a schematic enlarged diagram of a partial region in Fig. 1;
Fig. 3 shows a cross-sectional view of the optical anti-counterfeiting element of Fig. 1 along a principal line;
Fig. 4 is a schematic diagram illustrating distribution of inclination angles of reflective surfaces in Fig. 1;
Fig. 5 is a schematic diagram showing variation of inclination angles of the reflective surfaces in Fig. 4 along a principal line;
Fig. 6 shows a schematic diagram of a dynamic feature of the optical anti-counterfeiting element of Fig. 1 presented when rotated back and forth about a rotation axis by different angles;
Fig. 7 is a schematic diagram illustrating reflective surfaces having different inclination angles but the same rotation angle in an optical anti-counterfeiting element according to Embodiment II of the present invention;
Fig. 8 shows a schematic diagram after random variation of rotation angles in Fig. 7;
Fig. 9 is a schematic diagram illustrating reflective surfaces having same inclination angle and same rotation angle in the optical anti-counterfeiting element according to Embodiment II of the present invention;
Fig. 10 shows a schematic diagram after random variation of rotation angles in Fig. 9;
Fig. 11 is a schematic diagram showing distribution of one group of a rotation axis and a principal line of an optical anti-counterfeiting element according to Embodiment III of the present invention;
Fig. 12 shows a schematic diagram of a dynamic feature of the optical anti-counterfeiting element of Fig. 11 presented when rotated back and forth about a rotation axis by different angles;
Fig. 13 is a schematic diagram showing distribution of one group of a rotation axis and a principal line of an optical anti-counterfeiting element according to Embodiment IV of the present invention;
Fig. 14 is a schematic diagram showing variation of inclination angles of reflective surfaces in Fig. 13 along a principal line;
Fig. 15 shows a schematic diagram of a dynamic feature of the optical anti-counterfeiting element of Fig. 13 presented when rotated back and forth about a rotation axis by different angles;
Fig. 16 is a schematic diagram showing relative positions of a reflective structure and a plating layer according to Embodiment V of the present invention; and
Fig. 17 shows a schematic diagram of composition of the plating layer in Fig. 16.

The figures above include the following reference signs:
10. Substrate; 20. Micro-structure layer; 21.Reflective structure; 22.Reflective surface; 11.Partial region; 101.Upper end position; 102.Middle position; 103.Lower end position; 12.Local region; 121.Secondary position; 1011.First variation region; 1012.Second variation region; 1013.Third variation region; 103.Lower end position; 201.First region; 202.Second region; 221.First reflective surface; 222.Second reflective surface; 223.Third reflective surface; 224.Fourth reflective surface; 225.First reflection group; 226.Second reflection group; 227.Third reflection group; 30.Principal line; 40.Rotation axis; 50.Plating layer; 51.Reflective layer; 52.Dielectric layer; 53.Absorption layer; 60.Optical anti-counterfeiting element; 70.Carrier object; 80.lllumination light source; 81.Incident light; 82. Reflected light of first reflective surface; 83. Reflected light of third reflective surface; 84. Reflected light of second reflective surface; 85. Reflected light of fourth reflective surface; 90. Observer.

### Detailed Description of the Embodiments

It is to be noted that embodiments in the present invention and features in the embodiments may be combined with one another without conflicts. Hereinafter, the present invention is described in detail with reference to the accompanying drawings and in conjunction with the embodiments.

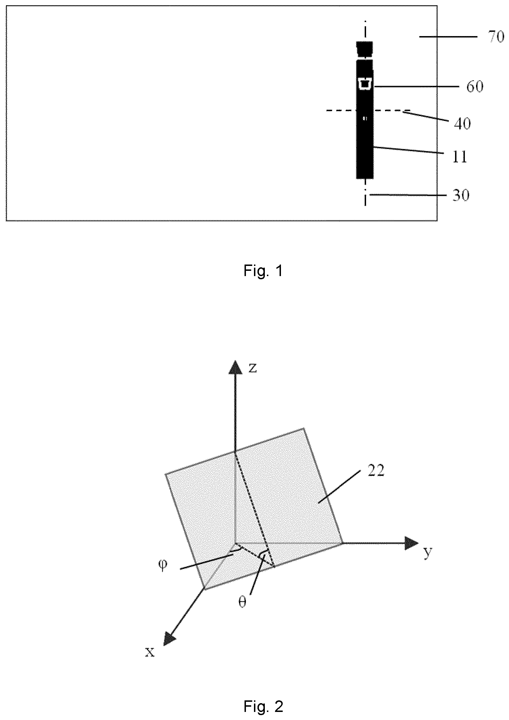

As shown in Figs. 1-17, an optical anti-counterfeiting element includes a substrate 10 and a micro-structure layer 20, wherein the micro-structure layer 20 is located on at least one side surface of the substrate 10, the micro-structure layer 20 has at least one principal line 30 in a plane where the micro-structure layer is located, and the micro-structure layer 20 includes a plurality of reflective structures 21 along an extension direction of the at least one principal line 30, aside of each of the plurality of reflective structures 21 away from the substrate 10 is provided with a reflective surface 22, and a plane angle of a dihedral angle formed by the reflective surface 22 and asurface of the substrate 10 is an inclination angle θ; wherein the inclination angles θ of all of the plurality of reflective structures 21 in the direction of the at least one principal line 30 include at least the variation period, and within the variation period, the variation of all of the inclination angles θ is formed by superposing a main variation and a secondary variation, and when the optical anti-counterfeiting element 60 is rotated along a rotation axis 40 in the plane where the optical anti-counterfeiting element 60 is located, the optical anti-counterfeiting element 60 presents a global dynamic feature and a localized dynamic feature due to the main variation and the secondary variation.

By providing the plurality of reflective structures 21 having reflective surfaces 22 along the at least one principal line 30, light rays reflected by each of the reflective surfaces 22 may enter user's eyes, such that a user may observe the reflective surface 22 at the position; and the inclination angles θ of the reflective surfaces 22 vary according to a specific rule, which may bring about many unique optical effects. Moreover, the inclination angles θ of the reflective surfaces 22 on the at least one principal line 30 have a variation period, and the variation of the inclination angles θ of the reflective surfaces 22 within the variation period is divided into a main variation and a secondary variation, such that when rotating the optical anti-counterfeiting element 60 along the rotation axis 40, a user may observe the global dynamic feature and the localized dynamic feature, and dynamic featuresare more complex and exquisite, which ensures the anti-counterfeiting effect while being convenient for the user to recognize; and in the whole process of the user rotating the optical anti-counterfeiting element 60, the dynamic featuresare clearly visible.

It should be noted that the secondary variation is localized, and in the extension direction along the at least one principal line 30, reflective structures 21 having the secondary variation feature only occupy a part of the plurality of reflective structures. That is to say, the inclination angles θ of reflective surfaces 22 of the part of the plurality of reflective structures have a superposition of the main variation and the secondary variation, and under the effect of the superposition of the main variation and the secondary variation, light rays reflected by reflective surfaces 22 of this part of the part of the plurality of reflective structures 21 exhibit the localized dynamic feature. "Superposition" means organically integrating the main variation and the secondary variation by calculation to form a new overall dynamic feature. In addition, since the secondary variation is localized, i.e. a part of the main variation process, occupied area of the secondary variation is necessarily less than that of the main variation. In addition, in positions of reflective structures 21 which only have the main variation and do not have the secondary variation, the dynamic feature exhibited is a part of the global dynamic feature. According to some embodiments of the present invention, on the basis of an original global long-distance dynamic sense, a more complex and detailed localized dynamic sense may be superposed; the global dynamic sense feature and the localized dynamic feature thereof are not simple and independent addition, but affect each other to form a whole, thereby effectively realizing the long-distance dynamic sense.

In some embodiments, within the variation period, the main variation at least includes one of the plurality of the reflective structures 21 at the beginning of the variation period having a maximum inclination angle θ, and one of the plurality of the reflective structures 21 at the end of the variation period having a minimum inclination angle θ. As the inclination angles θ ofthe plurality of the reflective structures 21 within the variation period gradually decrease, at the beginning of the variation period, the user observes an anti-counterfeiting feature presented at a position where the inclination angle θ is the maximum; along with rotation of the optical anti-counterfeiting element 60, anti-counterfeiting features presented at positions where the inclination angles θ become smaller and smaller are gradually observed, and during the rotation of the optical anti-counterfeiting element 60, the anti-counterfeiting features continuously vary so as to present the dynamic feature.

It should be noted that the main variation of the inclination angle θ brings about the global dynamic feature, that is to say, in the process of rotating the optical anti-counterfeiting element 60 along a single direction, the global dynamic feature also varies towards the single direction.

In some embodiments, within the variation period, the main variation at least includes one of the plurality of the reflective structures 21 at the beginning of the variation period having a minimum inclination angle θ, and one of the plurality of the reflective structures 21 at the end of the variation period having a maximum inclination angle θ.

In some embodiments, in the variation period, the main variation at least includes a variation of decreasing first and then increasing of the inclination angles θ of all of the plurality of the reflective structures 21 from the beginning of the variation period to the end of the variation period, such that the variation direction of the global dynamic feature is not a single direction, thereby enriching the effect of the global dynamic feature.

In some embodiments, within the variation period, the secondary variation at least includes an alternate variation process that the inclination angles θ of at least a part of all of the plurality of the reflective structures 21 have at least one alternate variation process of increasing and decreasing. By setting the secondary variation to be the variation rule of a part of inclination angles θ being an alternation of increasing and decreasing, in cases where the original global dynamic feature remains unchanged, a segment has a non-single movement direction, thereby presenting the localized dynamic feature. It should be noted that, in order to ensure that the global dynamic feature is not varied by the effect of the localized dynamic feature, no matter what increasing or decreasing variation rule of the inclination angles θ of the secondary variation is, the inclination angles of the secondary variation is not lower than the minimum value of the inclination angles θ that only have the main variation or is higher than the maximum value of the inclination angles θ that only have the main variation.

In an embodiment, when the optical anti-counterfeiting element 60 is rotated along the rotation axis 40 and in a single direction, the global dynamic feature rolls along a certain direction; however, in a certain segment, the rolling direction of the presented localized dynamic feature is inconsistent with the rolling direction of the global dynamic feature, and reciprocating motion of the rolling direction of the dynamic feature exists, but the finally presented rolling direction is the rolling direction of the global dynamic feature.

In some embodiments, the main variation and the secondary variation both have standard variation design values, and the inclination angles θ randomly vary within a range of 80%-120% of the standard variation design values. When the surface of the optical anti-counterfeiting element 60 is too smooth and flat, the surface of the optical anti-counterfeiting element 60 will generate dazzling glare light under the irradiation of an external light source. If the position of the light source is not suitable relative to the position observed by the user, the user may not be able to observe the dynamic pattern in the optical anti-counterfeiting element 60. Therefore, in order to further improve the public recognizability of the optical anti-counterfeiting element 60 involved in some embodiments of the present invention, the reflective surfaces 22 may be randomized to some extent. Without changing the overall angle variation rule, i.e. the standard variation design value, the inclination angles θ of the reflective surfaces 22 may vary, such that the inclination angles randomly vary within a range of 80%-120% of the standard variation design value, which achieves the effect of matte light, thereby reducing dazzling glare and increasing an observable angle.

In some embodiments, the inclination angles θ randomly vary within a range of 90%-110% of the standard variation design values.

In some embodiments, an angle formed by rotation of one of the plurality of the reflective structures 21 along a normal perpendicular to the surface of thesubstrate 10 forms a rotation angle ϕ. That is to say, the situation that the reflective surface 22 rotates along the normal perpendicular to the surface of the substrate 10 is represented by the rotation angle ϕ; moreover, as different rotation angles ϕ also lead to different directions of light rays reflected by the reflective surfaces 22, a variation rule of the rotation angles ϕ also affects the performance of the dynamic feature. In the optical anti-counterfeit element 60 of some embodiments of the present invention, the inclination angles θ determine the reflection directions of light rays at different positions. However, if the inclination angles θ of the reflective surfaces 22 conform to the superposition of the main variation and the secondary variation, but the rotation angles ϕ of the reflective surfaces 22 are all in one direction, the observation mode will be affected by the external light source, and thus the observation effect and the expression effect of the optical anti-counterfeiting feature will be affected.

In some embodiments, the rotation axe 40 and the at least one principal line 30 are arranged in one-to-one correspondence, and the rotation axis 40 anda principal lineof the at least one principal line 30 that are correspondingly arranged are arranged at an included angle. It should be noted that the rotation axis 40 and the at least one principal line 30 is able tobe at any angle, and when the optical anti-counterfeiting element 60 is rotated along a certain rotation axis 40, the reflective surfaces 22 of the reflective structures 21 in the extension direction of the corresponding principal line 30 present a dynamic feature correspondingly.

It should be noted that, in order to achieve a more easily-observable dynamic effect and facilitate recognition by the public, in an embodiment, there is a plurality of rotation axes 40, and correspondingly, there is a plurality of principal lines 30 perpendicular to the plane of the optical anti-counterfeiting element 60 inside the plane of the optical anti-counterfeiting element. In this way, when the userinclines the optical anti-counterfeiting element 60, the dynamic feature may be observed by randomly inclining the optical anti-counterfeiting element 60 without specifically looking for a rotation axis 40.

In some embodiments, an included angle between the rotation axis 40 and the at least one principal line 30 correspondingly arranged is α, the global dynamic feature includes a rolling feature, and an included angle between the movement direction of the rolling feature and the rotation direction of the optical anti-counterfeiting element 60 is β, and a sum of α and β is 90°. The included angle α between the rotation axis 40 and the at least one principal line 30 determines the included angle β between the movement direction of the rolling feature and the rotation direction of the optical anti-counterfeiting element 60. In an embodiment, the rotation axis 40 and the at least one principal line 30 are perpendicular to each other, then the movement direction of the rolling feature is the same as the rotation direction of the optical anti-counterfeiting element 60, for example, if the optical anti-counterfeiting element 60 is inclined back and forth, the dynamic feature moves back and forth. In another embodiment, the included angle α between the rotation axis 40 and the at least one principal line 30 is zero, the movement direction of the rolling features is perpendicular to the rotation direction of the optical anti-counterfeiting element 60. For example, when the optical anti-counterfeiting element 60 is inclined back and forth, the dynamic feature moves left and right.

It should be noted that, the rotation direction of the optical anti-counterfeiting element 60 herein refers to a direction perpendicular to the rotation axis of the optical anti-counterfeiting element 60 in the plane where the optical anti-counterfeiting element 60 is located.

In some embodiments, the optical anti-counterfeiting element 60 further includes a plating layer 50; the plating layer 50 is located on aside surface of the micro-structure layer 20 away from the substrate 10, and the plating layer 50 is configured for enhancing a reflection or transmission effect. By providing the plating layer 50 to enhance the optical effect, the recognizability of the dynamic feature may be improved, and also the anti-counterfeiting effect is enriched, thereby increasing the counterfeiting difficulty. In another embodiment, the plating layer 50 is deposited on the surface of the substrate 10.

In some embodiments, the plating layer 50 is a single-layer plating layer, and the single-layer plating layer facilitates machine shaping, thereby reducing manufacturing costs.

In some embodiments, the single-layer plating layer includes one of a single-layer metal plating layer or a single-layer dielectric plating layer.

In some embodiments, the plating layer 50 is a multilayer plating layer, so as to enrich the anti-counterfeiting effect and further increase the counterfeiting difficulty.

In some embodiments, the multilayer plating layer includes one of a multilayer dielectric plating layer, and a plating layer formed by alternately stacking metal plating layers and dielectric plating layers. In an embodiment, when a metal reflective material is combined with a reflective grating (for example, a wedge-shaped blazed grating with a period of 13 µm and a depth of 2 µm), the reflection efficiency is improved, and a bright reflection effect is formed.

In some embodiments, the multilayer plating layer is able to be a stack of high-refractive-index materials and low-refractive-index materials, and in the stack of the high- and low-refractive-index materials, the refractive index n of the high-refractive-index material is greater than or equal to 1.8, including but not limited to any material of ZnS, TiN, TiO₂, TiO, Ti₂O₃, Ti₃O₅, Ta₂O₅, Nb₂O₅, CeO₂, Bi₂O₃, Cr₂O₃, Fe₂O₃ or a combination thereof; the refractive index n of the low-refractive-index material is less than 1.8, including but not limited to any material of SiO₂, MgF₂, Na₃AlO₆, Al₂O₃, or a combination thereof. The high-refractive-index materials and low-refractive-index materials are arranged vertically in an overlapped manner to form a "high-refractive-index material/low-refractive-index material/high-refractive-index material/.../high-refractive-index material" film structure. Such a structure may form selective reflection and transmission of a specific spectrum wavelength, and form a first color when observed from the front, and form a complementary color of the first color when observed through light transmission. When a light ray is obliquely incident, an optical path of the light ray when propagating in the stack of the high-refractive-index materials and low-refractive-index materials is different from an optical path of the light ray when perpendicularly incident, and a second color is formed, thereby forming a color change effect.

In some embodiments, When the stack structure of "high-refractive-index material/low-refractive-index material/high-refractive-index material/.../high-refractive-index material" is configured in superposition with a one-dimensional sub-wavelength grating (for example, having a period of 350 nm and a depth of 110 nm), a third color different from the stack structure isformed.

In some embodiments, the multilayer plating layer is a Fabry-Perot resonant cavity structure consisting of a metal plating layer, a dielectric plating layer and a metal plating layer. The Fabry-Perot resonant cavity structure is a wavelength selection structure with higher reflection efficiency, and is a film structure of an "absorption layer/dielectric layer/reflective layer". The absorption layer, as a metal plating layer, is made of a metal material, and has a relatively thin thickness; when a light ray passes through the layer, approximately half of the light ray is reflected, and the other half of the light ray is transmitted; therefore, the absorption layer may be referred to as a "transflective film", which includes but is not limited to chromium, nickel, copper, cobalt, titanium, vanadium, tungsten, tin, silicon, germanium and a combination thereof, and the thickness thereof is able to be 2 nm to 30 nm. As for the dielectric layer, as a dielectric plating layer, one half of the dielectric layer is a metal compound, in an embodiment,the material of the dielectric layer is a low-refractive-index dielectric material with a refractive index less than 1.8, including but not limited to silicon dioxide, magnesium fluoride, cryolite, aluminum oxide and a combination thereof, and the thickness thereof is able to be 100 to 1000 nm; in another embodiment,the dielectric material is be a high-refractive-index material with a refractive index greater than 1.8, including but not limited to any material of ZnS, TiN, TiO₂, TiO, Ti₂O₃, Ti₃O₅, Ta₂O₅, Nb₂O₅, CeO₂, Bi₂O₃, Cr₂O₃, Fe₂O₃, or a combination thereof. As for the reflective layer, as a metal plating layer, the material of the plating layer is generally a metal material having high reflectivity, in another embodiment, the material of the plating layer is a non-metal material, including but not limited to any material of aluminum, silver, tin, nickel, chromium, platinum, copper, gold, and silicon or a combination thereof, and has a thickness greater than or equal to 10 nm.

In the Fabry-Perot resonant cavity structure, the absorption layer serves as a beam splitter, which reflects a half of the light ray (referred to as a first light beam), and transmits the other half of the light ray. The transmitted light, after passing through the dielectric layer, is reflected by the reflective layer, and then is emitted through the absorption layer (referred to as a second light beam), and the first light beam and the second light beam interact to generate interference, so as to form selective enhancement of a specific wavelength. Therefore, a color may be observed. When the light ray changes the incident direction, an optical path of a light beam in the dielectric layer changes, and if the dielectric material is a high-refractive-index material, the color does not change or does not change significantly; and if the dielectric material is a low-refractive-index material, the color change is obvious, and a so-called optically variable effect is achieved. In an embodiment, the Fabry-Perot resonant cavity structure is metal chrome/silicon dioxide/metal aluminum or metal aluminum/aluminum oxide/metal aluminum, and when an observation angle is changed, the color of the Fabry-Perot resonant cavity may change.

It should be noted that, in some embodiments, no matter whether the plating layer 50 is a single-layer plating layer or a multilayer plating layer, the metal plating layer included in the plating layer 50 is a metal reflective plating layer, usually, the metal plating layer is made of a metal material with high reflectivity or a corresponding alloy material, and made of a full-spectrum reflective material in some embodiments, such as aluminum, silver, tin, nickel, chromium, platinum, etc.; and in others embodiments, the plating layer is made of a reflective material having a specific color and a corresponding alloy material, e.g. materials such as copper and gold, and such a material may produce a fixed color while providing a high reflectivity. The function of the metal reflective plating layer is mainly to increase the diffraction and reflection efficiency, and the metal reflective plating layer itself does not have the effect of color change.

It should be noted that, no matter whether the plating layer 50 is a single-layer plating layer or a multilayer plating layer, in some embodiments,the dielectric plating layer included in the plating layer 50 is a metal compound; and the metal compound is a metal oxide, such as titanium dioxide, silicon dioxide, zirconium dioxide, etc.; or a metal sulfide such as zinc sulfide; and may also be other metal compounds. In some embodiments, the dielectric plating layer may also be an optical dielectric material, such as silicon dioxide or the like.

In some embodiments, each of the plurality of the reflective structures 21 has a feature size greater than or equal to 1 µm and less than or equal to 500 µm. It should be noted that the feature size measures the size of a projection of each of the plurality of the reflective structures 21 on the plane where the optical anti-counterfeiting element 60 is located, and is equal to or greater than 1 µm and equal to or less than 500 µm in both orthogonal directions. Generally, the two orthogonal directions refer to the width or period of each of the plurality of the reflective structures 21. In one dimensional direction, the feature size of each of the plurality of the reflective structures 21 is 1 µm to 500 µm, and the other dimension orthogonal to the described dimension is a macroscopic size comparable to that of the optical anti-counterfeiting element 60 in an embodiment, and is 1 µm to 500 µm in another embodiment.

In some embodiments, each of the plurality of the reflective structures 21 has a feature size greater than or equal to 2 µm and less than or equal to 100 µm.

In some embodiments, aside surface of one of the plurality of the reflective structures 21 away from the substrate 10 is a flat surface, and the flat surface forms the reflective surface. The flat surface may realize higher reflection efficiency, and realize directional reflection of incident light. A tiny reflective surface 22 is able tobe made by laser etching, electron beam etching or the like.

In some embodiments, the side surface of one of the plurality of the reflective structures 21 away from the substrate 10 is a curved surface, and an average value of plane angles of dihedral angles formed by tangent planes of all points on the curved surface and the surface of the substrate 10 represents a plane angle of a dihedral angle formed by the reflective surface 22 and the surface of the substrate 10. That is to say, when the reflective surface 22 is a curved surface, reflected light spreads to some extent in a fixed reflection direction; therefore, brightness variation will be more gentle.

In some embodiments, the inclination angle θ and the rotation angle ϕ of each of the plurality of the reflective structures 21 both follow a certain regular change, such that the optical anti-counterfeiting element 60 presents a relief feature protruding above the optical anti-counterfeiting element 60 or recessed below the optical anti-counterfeiting element 60. In this case, a Fresnel structure is adopted, and one of the plurality of the reflective structures 21 is designed as a micron-scale grating, so as to achieve a relief effect. In particular, the feature formed by the secondary variation is the relief itself, and the main variation is to add the overall effect to the optical anti-counterfeiting element 60, such that the feature of a small relief may be superposed on a large relief, for example, a plurality of features existing in reality like a lantern and an ornamental pillar, etc. Moreover, by means of a special design, novel features having no actual models in reality may also be realized.

The optical anti-counterfeiting element 60 in some embodiments of the present invention may also be configured as a label, an identifier, a wide strip, a transparent window, a coating film or the like, which may be adhered to various articles by various adhesive mechanisms. For example, the optical anti-counterfeiting element is transferred to high-security products and high-value-added products such as banknotes, credit cards, etc.

Some embodiments of the present invention also provide: an optical anti-counterfeiting product, including the described optical anti-counterfeiting element 60. The optical anti-counterfeiting element 60 includes, but is not limited to various high-security products and high-value-added products such as banknotes, credit cards, passports, securities, etc., and various packaging papers, packaging boxes and the like.

### Embodiment I

As shown in Figs. 1-6, the optical anti-counterfeiting element 60 is able tobe attached on a carrier object 70. The carrier object 70 may be banknotes, paper, passports, securities, etc., and the material thereof may be paper, polypropylene, polycarbonate, etc.

In this embodiment, there is a rotation axis 40 and a principal line 30. When the optical anti-counterfeiting element 60 is inclined back and forth along the rotation axis 40, a specific dynamic effect will be produced in the direction of the principal line 30.

Fig. 2 shows an enlargement situation of a partial region 11 in Fig. 1. It can be seen from the figure that the plane where the optical anti-counterfeiting element 60 is located is a plane xy, on which a reflective surface 22 isprovided, and the reflective surface 22 is aplane. The reflective surface 22 forms a certain included angle with the plane xy where the optical anti-counterfeiting element 60 is located. It is determined from solid geometry that the included angle in a solid figure is decomposed into an inclination angle θ and a rotation angle ϕ orthogonal to each other, in which the inclination angle θ reflects the inclination situation of the reflective surface 22 relative to the plane xy where the optical anti-counterfeiting element 60 is located, and the rotation angle ϕ represents the rotation situation around a normal perpendicular to the plane xy in the case of the described inclination angle θ.

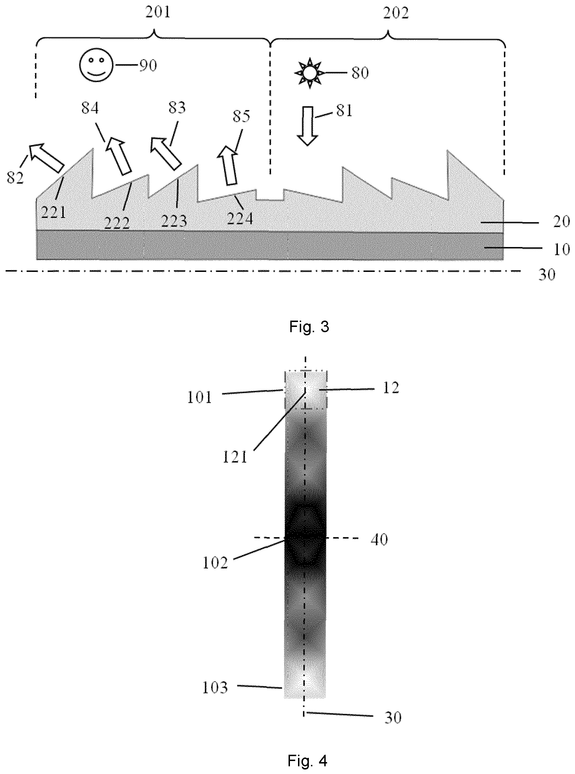

Fig. 3 shows a cross-sectional view of the optical anti-counterfeiting element 60 along the at least one principal line 30. It can be seen from the cross-sectional view that, the optical anti-counterfeiting element 60 includes a substrate 10; a micro-structure layer 20 is provided on the substrate 10, the micro-structure layer 20 is composed of a plurality of reflective structures 21, and the micro-structure layer 20 is divided into a first region 201 and a second region 202 according to the properties of the inclination angle θ and the rotation angle ϕ of aplurality of reflective surfaces 22. The plurality of reflective surfaces 22 in the first region 201 sequentially include a first reflective surface 221, a second reflective surface 222, a third reflective surface 223 and a fourth reflective surface 224, in which: (1) the inclination angles θ of the first reflective surface 221 to the fourth reflective surface 224 present an overall decrease process; and (2) within a small range, i.e. from the second reflective surface 222 to the fourth reflective surface 224, the inclination angle θ presents a variation of increasing first and then decreasing.

When incident light 81 of an illumination light source 80 set externallyis irradiated onto the optical anti-counterfeiting element 60, the light is reflected by the reflective surfaces 22, and seen by an observer 90. When the position of the illumination light source 80 is fixed and remains unchanged and an observation angle is changed, reflected light 82 of the first reflective surface having the largest inclination angle θ is seen by the observer 90, and the observer 90 perceives that the optical anti-counterfeiting element 60 is bright at the position of the first reflective surface 221; When the observation angle becomes smaller, reflected light 83 of the third reflective surface is seen by the observer 90, the observer 90 perceives that the optical anti-counterfeiting element 60 is bright at the position of the third reflective surface 223, and a bright spot moves from the position of the first reflective surface 221 to the third reflective surface 223. When the observation angle continues to become smaller, reflected light 84 of the second reflective surface is seen by the observer 90, the observer 90 perceives that the optical anti-counterfeiting element 60 is bright at the position of the second reflective surface 222, and the bright spot moves from the position of the third reflective surface 223 to the second reflective surface 222 in an opposite direction. When the observation angle further becomes smaller, reflected light 85 of the fourth reflective surface is seen by the observer 90, the observer 90 perceives that the optical anti-counterfeiting element 60 is bright at the position of the fourth reflective surface 224, and the bright spot moves from the position of the second reflective surface 222 to the fourth reflective surface 224. That is to say, along with inclination variation of the optical anti-counterfeiting element 60, a global dynamic feature presents an overall variation from front to back, and also a localized dynamic feature presents a back-and-forth reciprocating motion.

Fig. 4 shows the distribution situation of the inclination angle θ in Fig. 3. In Fig. 4, the magnitude of the inclination angle θ of the reflective surface 22 at the position is quantitatively represented by grayscale values of pixels. It is determined from Fig. 4 that, in the direction along the principal line 30: (1) as a whole, the image grayscale changes from white at an upper end position 101 to black at a middle position 102, and then changes from black to white at a lower end position 103, which indicates that at the upper end position 101 of the optical anti-counterfeiting element 60, the inclination angle θ of the reflective surface 22 is large; and during transition to the middle position 102 of the optical anti-counterfeit element 60, the inclination angle θ of the reflective surface 22 presents an overall decreasing trend, and is minimal at the middle position 102. (2) Locally speaking, the image grayscale exhibits a local increase first and then decrease, that is, when the overall inclination angle θ becomes small, in a local region 12, the inclination angle θ of the reflective surface 22 increases first, and reaches the maximum at a secondary position 121 and then decreases. Similarly, in the range from the upper end position 101 to the middle position 102, the process of increase first and then decrease in the local region 12 repeatedly occurs.

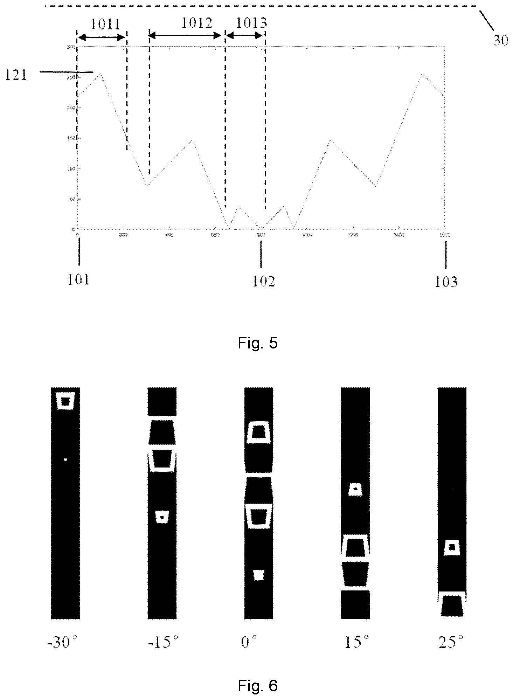

Fig. 5 shows the variation situation of the inclination angle along the principal line 30 in the variation of the inclination angle as shown in Fig. 4. As can be seen more clearly in Fig. 5, during the variation from the upper end position 101 to the middle position 102, the inclination angle θ of the reflective surface 22 presents an overall decrease trend; but in the decrease process, there are three local variation regions, i.e. a first variation region 1011, a second variation region 1012 and a third variation region 1013, which all have the processes of increasing first and then decreasing on the overall decrease tendency of the inclination angle θ. That is, the inclination angle is formed by superposing a main variation and a secondary variation, the main variation is the inclination angle decreasing, and the secondary variation is that the inclination angle θ first increases and then decreases. Likewise, during the variation from the middle position 102 to the lower position 103, the main variation in the inclination angle θ is an increase, and the secondary variation is increase first and then decrease.

Fig. 6 shows dynamic features presented at different angles when the optical anti-counterfeiting element 60 is inclined back and forth around the rotation axis 40. It is found from the figure that when the optical anti-counterfeiting element 60 is inclined back and forth around the rotation axis 40, a pattern in the optical anti-counterfeiting element 60 as a whole presents a global dynamic feature moving from top to bottom. However, in such an overall movement process, a dynamic graph "trapezoid" also presents a zooming feature, i.e. a localized dynamic feature. Therefore, the whole dynamic feature is a superposition of the global dynamic feature and the localized dynamic feature, and presents a zooming feature on the basis of overall rolling feature.

### Embodiment II

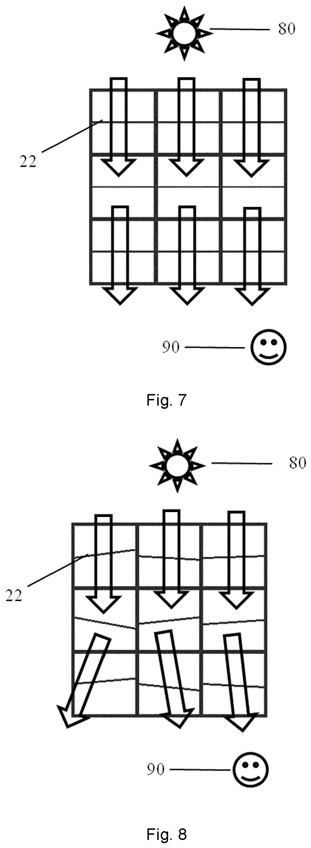

As shown in Figs. 7-10, this embodiment differs from Embodiment I in that: at least a part of all of the plurality of the reflective structures 21 of the micro-structure layer 20 form an adjustment structure, and the rotation angles ϕ of reflective structures 21 in theadjustment structure appear random variation or pseudo-random variation.

In some embodiments, the rotation angle ϕ randomly varies within a range of 80%-120% of a standard variation design value, and by the same reasoning as that of random variation of the inclination angle θ within a range of 80%-120% of a standard variation design value, the effect of matte light may also be achieved, thereby reducing dazzling glare and increasing an observable angle.

In an embodiment, when the lateral size of the reflective surface 22 is 20 µm, the inclination angle is 10°. By varying the inclination angle to some extent, for example varying the inclination angle of 10° to an inclination angle of 8°-12°, a portion of all reflective surfaces 22 that would have been originally observed at 20° maynot be observed at 20°, and at this time, the position occupied by this portion of reflective surfaces 22 would present a black color, and this portion of reflective surfaces 22 would be observed again at an angle of 16°-24° (not including 20°). In this way, several noise points appear in an original continuously-varying image, and a matte light feature is presented.

In an embodiment, in the case as shown in Fig. 7, when a point light source is configured for illumination, as the rotation angles ϕ of the reflective surfaces 22 are the same, reflection directions of the various reflective surfaces 22 are all the same. When the observer is not in an observation direction, no reflected light enters the observer's eyes, i.e. the observermaynot observe a dynamic pattern in the optical anti-counterfeiting element 60. In the case where the inclination angle θ is fixed, the rotation angle ϕ may also achieve an effect on the dynamic appearance effect. When the rotation angle ϕ deviates from an original angle within a certain range, a matte effect may also be produced. As shown in Fig. 8, the rotation angles ϕ of the reflective surfaces 22 in the optical anti-counterfeiting element 60 aresubjected to a certain swing, and under the same point light source, the reflected lightsarescattered to different directions, such that the observer may observe the reflective surface 22, i.e. the public may observe the dynamic pattern in the optical anti-counterfeiting element 60.

In some embodiments, the number of reflective structures 21 in the adjustment structure is n andthe reflective structuresin the adjustment structure are divided into m groups, rotation angles ϕ of reflective structures 21 in the same group are the same, and rotation angles ϕ of reflective structures 21 in different groups appear random variation or pseudo-random variation, where m<n and the number of reflective structures 21 in each group is not less than 1.

It should be noted that, in an original design, the number of reflective structures 21 in the adjustment structure in the reflective surfaces 22 in which the inclination angle is θ and the rotation angle is ϕ is n; if the inclination angle θ remains unchanged, the rotation angle ϕ randomly or pseudo-randomly varies to a certain degree, then the original rotation angle ϕ is changed into n random or pseudo-random angles centered at ϕ. Strictly speaking, under a fixed angle, the number of reflective surfaces 22 that is observed becomes 1; therefore, the brightness of the dynamic pattern will be 1/n of the original brightness. In this way, although more observation angles may be achieved and the recognizability of an optical anti-counterfeiting feature is increased, the brightness of the optical anti-counterfeiting element 60 is also greatly reduced. Therefore, the randomness of the rotation angle ϕ is able to be limited to a certain degree, instead of completely randomizing the rotation angles ϕ in a completely simple way, the rotation angles are divided into m groups, reflective surfaces 22 in each group may not be connected together, but the inclination angles θ and rotation angles ϕ thereof are all the same. Although this arrangement reduces randomness, human eyes maynot distinguish complete randomness or grouped randomness as the number of groups is large enough. Therefore, the matte effect may still be achieved, the observation angle is increased, and sufficient brightness is retained for observation by the public. Such a method may achieve higher reflection efficiency, and avoids the defect that the brightness of an image decreases too much due to the fact that reflected light is excessively dispersed caused by complete randomness of the rotation angle ϕ.

It should be noted that pseudo-random distribution of the rotation angle ϕ is able tobe generated within a certain angle range by using an existing algorithm.

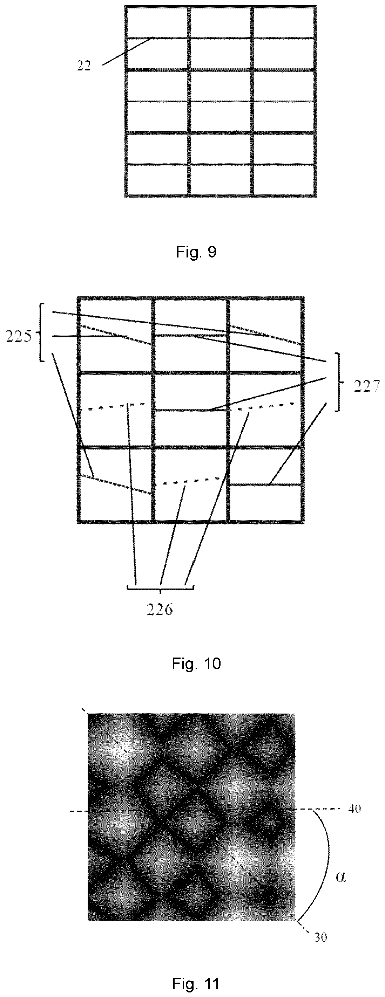

Fig. 9 shows a combination of a total of ninereflective surfaces 22 having the same inclination angle and the same rotation angle. In Fig. 10, the nine reflective surfaces 22 are divided into three groups, which are a first reflection group 225, a second reflection group 226 and a third reflection group 227, respectively; each of the three groups has three reflective surfaces 22. In the three groups of reflective surfaces 22, the inclination angles and the rotation angles of the reflective surface 22 in each of the three groups are the same. In this case, when the illumination light source 80 is incident to the optical anti-counterfeiting element 60, reflected light rays are reflected in three directions by modulation of the reflective surfaces 22, such that human eyes may observe a dynamic pattern in the three directions, and the light intensity in each of the three directions is 1/3 of the original light intensity of all reflected light. When there are a sufficient number of reflective surfaces 22 having the same inclination angle, even if the direction of the rotation angle is not completely randomized, but is oriented in several specific directions, a random effect may be brought to the observer, so as to achieve the feature of matte light, and the brightness is kept at a certain intensity, thereby comprehensively achieving the feature of easy recognition under the condition of multiple angles and multiple light sources.

### Embodiment III

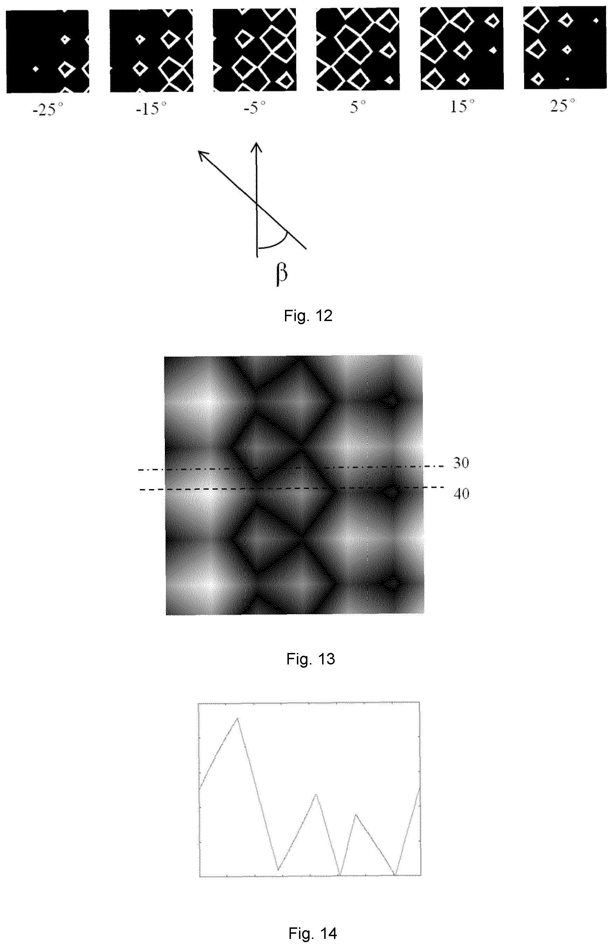

As shown in Figs. 11 and 12, this embodiment differs from Embodiment I in that: the included angle α between the rotation axis 40 and the principal line 30 is different.

Grayscale value in Fig. 11 indicates the inclination angle of the reflective surface 22 at the position, and the variation in grayscale values 255 to 0 indicates that the inclination angle varies from large to small. The rotation axis 40 is in a horizontal direction, and the included angle α between the principal line 30 and the rotation axis 40 is 45°.

Fig. 12 shows dynamic patterns presented when the optical anti-counterfeiting element 60 is inclined. It can be seen from the figure that when the optical anti-counterfeiting element 60 is inclined towards a negative direction (forward) by 25°, the dynamic pattern appears from the lower right corner of the optical anti-counterfeiting element 60; and in the process of inclining from the negative direction (forward) to a positive direction (backward), the pattern sequentially moves towards the upper left of the optical anti-counterfeiting element 60; and an included angle β between the movement direction of the rolling feature and the rotation direction of the optical anti-counterfeiting element 60 is 45°.

### Embodiment IV

This embodiment differs from Embodiment III in that: α is different from β.

As shown in Figs. 13-15, the rotation axis 40 and the principal line 30 of the optical anti-counterfeiting element 60 are parallel. Fig. 13 shows a case in which the rotation axis 40 is parallel to the principal line 30; in this case, the rotation axis 40 is in the horizontal direction, and the principal line 30 is also in the horizontal direction, and the two are parallel to each other. Fig. 14 shows the situation of inclination angles of the reflective surfaces 22 at positions along the principal line 30. It can be seen from Fig. 14 that the inclination angles present a rule of superposition of main variation from large to small and secondary variation of magnitude oscillation according to a preset variation rule.

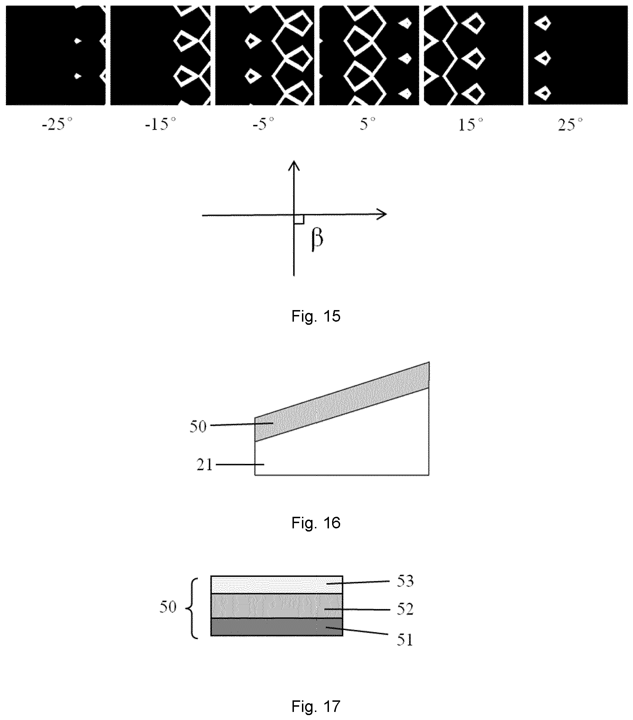

As shown in Fig. 15, when the optical anti-counterfeiting element 60 is inclined back and forth along the rotation axis 40, the dynamic pattern moves from right to left to change, wherein macroscopic movement from right to left is a global dynamic feature, and during the movement, diamond patterns present a zooming dynamic feature which is a localized dynamic feature. The overall dynamic effect is a superposition of the global dynamic feature and the localized dynamic feature. In this case, the movement direction of the dynamic pattern is horizontal, whereas the inclination direction is a vertical direction, and an included angle β between the two is 90°, which presents an orthogonal law. When the optical anti-counterfeiting element 60 is inclined back and forth, the dynamic pattern moves left and right.

### Embodiment V

This embodiment differs from Embodiment I in that:the plurality of the reflective structures 21 is provided with a plating layer 50.

As shown in Fig. 16, a plating layer 50 is deposited on the reflective surface 22, wherein the plating layer 50 is composed of a reflective layer 51, a dielectric layer 52 and an absorption layer 53; in this embodiment, the reflective layer 51 is aluminum and has a thickness of 50 nm, the dielectric layer 52 is magnesium fluoride and has a thickness of 430 nm, and the absorption layer 53 is iron and has a thickness of 7 nm. In the case of the described materials and parameters, the reflective layer 51, the dielectric layer 52 and the absorption layer 53 in the plating layer 50 work together to form a Fabry-Perot resonant cavity structure. When white light is incident, the plating layer 50 modulates the incident white light, and reflected light presents golden yellow. When the observation angle is changed, a relative optical path difference of the resonant cavity varies, a modulating enhanced color also varies accordingly, and the golden yellow changes to green, thereby realizing an optically variable feature in which the color changes along with the change of the observation angle. When the arrangement rule of the reflective surfaces 22 presents a superposition of main feature and secondary feature as described in some embodiments of the present invention, when the optical anti-counterfeiting element 60 is inclined, the color also changes from golden yellow to green while presenting the global dynamic feature and the localized dynamic feature, thereby further increasing the anti-counterfeiting difficulty and being easy to be recognized by the public.

From the description above, it is determined that the embodiments above of the present invention achieve the following technical effects:
1. The inclination angles θ of the reflective surfaces 22 arranged on the principal line 30 have a variation period, and the variation of the inclination angles θ of the reflective surfaces 22 within the variation period is divided into a main variation and a secondary variation, such that when rotating the optical anti-counterfeiting element 60 along the rotation axis 40, a user may observe the global dynamic feature and the localized dynamic feature, and the dynamic feature is more complex and exquisite, which ensures the anti-counterfeiting effect while being convenient for the user to recognize; and in the whole process of the user rotating the optical anti-counterfeiting element 60, the dynamic feature is clearly visible.
2. The rotation angle ϕ and the rotation angle ϕ are able to randomly vary within a range of 80%-120% of a standard variation design value, and by the same reasoning as that of random variation of the inclination angle θ within a range of 80%-120% of a standard variation design value, the effect of matte light may also be achieved, thereby reducing dazzling glare and increasing an observable angle.

Finally, it should be emphasized that the content above merely relates to preferred embodiments of the present invention, and is not intended to limit the present invention. For a person skilled in the art, the present invention may have various modifications and changes. Any modifications, equivalent replacements, improvements and the like made within the spirit and principle of the present invention shall all fall within the scope of protection of the present invention.

## Claims

1. An optical anti-counterfeiting element, comprising:
a substrate (10); and
a micro-structure layer (20), wherein the micro-structure layer (20) is located on at least one side surface of the substrate (10), and aplane where the micro-structure layer (20) is located has at least one principal line (30), the micro-structure layer (20) comprises a plurality of reflective structures (21) along an extension direction of the at least one principal line (30); aside of each of the plurality of reflective structures (21) away from the substrate (10) is provided with a reflective surface (22), and a plane angle of a dihedral angle formed by the reflective surface (22) and asurface of the substrate (10) is an inclination angle;
wherein inclination angles of all of the plurality of reflective structures (21) in the extension direction of the at least one principal line (30) at least comprise a variation period, and within the variation period, avariation of all of the inclination angles is formed by superposing a main variation and a secondary variation, and when the optical anti-counterfeiting element is rotated along a rotation axis (40) in aplane where the optical anti-counterfeiting element is located, the optical anti-counterfeiting element presents a global dynamic feature and a localized dynamic feature due to the main variation and the secondary variation.

2. The optical anti-counterfeiting element as claimed in claim 1, wherein within thevariation period, the main variation at least comprises one of the plurality of reflective structures (21) at the beginning of the variation period having a maximum inclination angle, and one of the plurality of reflective structures (21) at the end of the variation period having a minimum inclination angle.

3. The optical anti-counterfeiting element as claimed in claim 1, wherein within thevariation period, the main variation at least comprises one of the plurality of reflective structures (21) at the beginning of the variation period having a minimum inclination angle, and one of the plurality of reflective structures (21) at the end of the variation period having a maximum inclination angle.

4. The optical anti-counterfeiting element as claimed in claim 1, wherein within the variation period, the main variation at least comprises a variation of decreasing first and then increasing of the inclination angles of all of the plurality of the reflective structures (21) from abeginning of the variation period to anend of the variation period.

5. The optical anti-counterfeiting element as claimed in claim 1, wherein within the variation period, the secondary variation at least comprises that inclination angles of at least a part of all of the plurality of the reflective structures (21) have at least one alternate variation process of increasing and decreasing.

6. The optical anti-counterfeiting element as claimed in claim 1, wherein the main variation and the secondary variation both have standard variation design values, and the inclination angles randomly vary within a range of 80%-120% of the standard variation design values.

7. The optical anti-counterfeiting element as claimed in claim 6, wherein the inclination angles randomly vary within a range of 90%-110% of the standard variation design values.

8. The optical anti-counterfeiting element as claimed in any one of claims 1-7, wherein an angle formed by rotation of one of the plurality of the reflective structures (21) along a normal perpendicular to the surface of thesubstrate (10) forms a rotation angle.

9. The optical anti-counterfeiting element as claimed in claim 8, wherein at least a part of all of the plurality of the reflective structures (21) of the micro-structure layer (20) form an adjustment structure, and rotation angles of reflective structures (21) in the adjustment structure appear random variation or pseudo-random variation.

10. The optical anti-counterfeiting element as claimed in claim 9, wherein anumber of the reflective structures (21) in the adjustment structure is n and the reflective structures (21) in the adjustment structure are divided into m groups, rotation angles of reflective structures (21) in asame group in the adjustment structureare the same, and rotation angles of reflective structures (21) in different groups appear random variation or pseudo-random variation, where m<n and the number of reflective structures (21) in each group is not less than 1.

11. The optical anti-counterfeiting element as claimed in any one of claims 1-7, wherein the rotation axe (40) and the at least one principal line (30) are arranged in one-to-one correspondence, and the rotation axis (40) and a principal lineof the at least one principal line (30) that are correspondingly arranged are arranged at an included angle.

12. The optical anti-counterfeiting element as claimed in claim 11, wherein an included angle between the rotation axis (40) and the principal lineof the at least one principal line (30) correspondingly arranged is α, the global dynamic feature comprises a rolling feature, and an included angle between amovement direction of the rolling feature and arotation direction of the optical anti-counterfeiting element is β, and a sum of α and β is 90°.

13. The optical anti-counterfeiting element as claimed in any one of claims 1-7, wherein the optical anti-counterfeiting element further comprises a plating layer (50); the plating layer (50) is located on aside surface of the micro-structure layer (20) away from the substrate (10), and the plating layer (50) is configured for enhancing a reflection effect or a transmission effect.

14. The optical anti-counterfeiting element as claimed in claim 13, wherein the plating layer (50) is a single-layer plating layer.

15. The optical anti-counterfeiting element as claimed in claim 14, wherein the single-layer plating layer comprises one of a single-layer metal plating layer or a single-layer dielectric plating layer.

16. The optical anti-counterfeiting element as claimed in claim 13, wherein the plating layer (50) is a multilayer plating layer.

17. The optical anti-counterfeiting element as claimed in claim 16, wherein the multilayer plating layer comprises one of a multilayer dielectric plating layer, and a plating layer formed by alternately stacking metal plating layers and dielectric plating layers.

18. The optical anti-counterfeiting element as claimed in claim 17, wherein the multilayer plating layer is a Fabry-Perot resonant cavity structure consisting of a metal plating layer, a dielectric plating layer and a metal plating layer.

19. The optical anti-counterfeiting element as claimed in any one of claims 1-7, wherein each of the plurality of the reflective structures (21) has a feature size greater than or equal to 1 µm and less than or equal to 500 µm.

20. The optical anti-counterfeiting element as claimed in claim 19, wherein each of the plurality of the reflective structures (21) has a feature size greater than or equal to 2 µm and less than or equal to 100 µm.

21. The optical anti-counterfeiting element as claimed in any one of claims 1-7, wherein aside surface of one of the plurality of the reflective structures (21) away from the substrate (10) is a flat surface, and the flat surface forms the reflective surface (22).

22. The optical anti-counterfeiting element as claimed in any one of claims 1-7, wherein aside surface of one of the plurality of the reflective structures (21) away from the substrate (10) is a curved surface, and an average value of plane angles of dihedral angles formed by tangent planes of all points on the curved surface and the surface of the substrate (10) represents a plane angle of a dihedral angle formed by the reflective surface (22) and the surface of the substrate (10).

23. An optical anti-counterfeiting product, comprising the optical anti-counterfeit element as claimed in any one of claims 1-22.
